# EUROPÄISCHE PATENTANMELDUNG

(11) **EP 1 961 989 A1**
(43) Veröffentlichungstag der Anmeldung: **27.08.2008**
(21) Anmeldenummer: 08002780.8
(22) Anmeldetag: 15.02.2008
(51) Int. Cl.: F16F 9/44, F16F 9/512

(54) **Kolben-Zylinder-Aggregat**

(30) Priorität: 23.02.2007 DE 102007009012
(71) Anmelder: ZF FRIEDRICHSHAFEN AG, 88046 Friedrichshafen (DE)
(72) Erfinder: Litterscheid, Dirk, 53783 Eitorf (DE)

(57) **Zusammenfassung**

Kolben-Zylinder-Aggregat mit verstellbarer Dämpfungskraft, bestehend aus einem an einer Kolbenstange befestigten Dämpfungskolben, der den Arbeitszylinder in zwei mit Dämpfungsflüssigkeit gefüllte Arbeitsräume unterteilt und einem über ein Bodenventil verbindbaren Ausgleichsraum und dass die Arbeitsräume über mindestens ein verstellbares Dämpfungsventil miteinander in Verbindung stehen, wobei mindestens ein mit dem unteren Arbeitsraum zusammenarbeitendes Rückschlagventil des Bodenventils über den Druck des oberen Arbeitsraumes hydraulisch beaufschlagt wird.

## Beschreibung

Die Erfindung bezieht sich auf ein Kolben-Zylinder-Aggregat mit verstellbarer Dämpfungskraft, bestehend aus einem an einer Kolbenstange befestigten Dämpfungskolben, der den Arbeitszylinder in zwei mit Dämpfungsflüssigkeit gefüllte Arbeitsräume unterteilt und einem über ein Bodenventil verbindbaren Ausgleichsraum und dass die Arbeitsräume über mindestens ein verstellbares Dämpfungsventil miteinander in Verbindung stehen.

Es sind bereits Kolben-Zylinder-Aggregate bekannt (z.B. DE 40 19 221), die als Einrohrdämpfer mit einem verstellbaren Dämpfungsventil im Dämpfungskolben ausgebildet sind. Darüber hinaus sind verstellbare Schwingungsdämpfer in Zweirohrbauweise bekannt (DE 35 18 327, Figur 4), bei denen zusätzlich zwischen dem Ausgleichsraum und dem unteren Arbeitsraum ein Bodenventil vorgesehen ist.

Bei sogenannten Einrohrdämpfern, bei denen ein Arbeitsraum lediglich durch einen Trennkolben von einem Ausgleichsraum getrennt ist, ist eine Dämpfungskennlinienvielfalt von der Vorspannung des Druckgases, welches sich im Ausgleichsraum befindet, abhängig.

Bei Schwingungsdämpfern mit einem Bodenventil, welche eine feste Einstellung aufweisen, werden die Kennfeldgrenzen der Druckstufe durch die gewählte Widerstandscharakteristik des Bodenventils limitiert, das bedeutet, dass die Dämpfungskraftuntergrenze im Minimum gleich der am Bodenventil erzeugten Dämpfungskraft ist. Die Dämpfungskraftobergrenze bestimmt sich ebenfalls durch die gewählte Bodenventilcharakteristik, da das Dämpfungsventil im Dämpfungskolben maximal auf das Druckniveau des Bodenventils angehoben werden kann. In der Praxis bedeutet dies, dass eine immerwährende Kompromissfindung bei der Festlegung der Bodenventilcharakteristik im Hinblick auf Komfort (Dämpfungskraftuntergrenze) und Fahrsicherheit (Dämpfungskraftobergrenze) gegeben ist.

Um dieses Prinzip zu überwinden, wäre ein zweiter Aktuator zur Verstellung der Bodenventilcharakteristik notwendig, was sich jedoch nachteilig auf Kosten, Bauraum und Leistungsaufnahme des gesamten Systems auswirkt.

Aufgabe der Erfindung ist es, ein Kolben-Zylinder-Aggregat ohne erhöhte Aufwendung zu schaffen, bei dem eine Erhöhung der Kennfeldspreizung erzielt werden kann, ohne dass gleichzeitig eine Erhöhung des Bauraums und der Kosten auftritt.

Zur Lösung dieser Aufgabe ist erfindungsgemäß vorgesehen, dass mindestens ein mit dem unteren Arbeitsraum zusammenarbeitendes Rückschlagventil des Bodenventils über den Druck des oberen Arbeitsraumes hydraulisch beaufschlagt wird.

Vorteilhaft ist hierbei, dass durch eine Verstellung eines verstellbaren Dämpfungsventiles im Dämpfungskolben die im oberen Arbeitsraum erfolgte Druckänderung zur Vorspannungsänderung eines Rückschlagventiles im Bodenventil genutzt werden kann.

Nach einem wesentlichen Merkmal ist vorgesehen, dass im Dämpfungskolben mindestens für die Druckrichtung ein verstellbares Dämpfungsventil vorgesehen ist.

Eine weitere Ausgestaltung sieht vor, dass das Rückschlagventil über eine, mit dem oberen Arbeitsraum in Verbindung stehende, Druckkammer beaufschlagt wird. Vorteilhaft ist hierbei, dass die Druckkammer einen Trennkolben aufweist, der das hydraulische Medium trennt und dass die Druckkammer einen Raum aufweist, der eine Feder aufnimmt, die auf den Trennkolben in Schließrichtung des Rückschlagventils wirkt.

Nach einer günstigen Ausgestaltung ist vorgesehen, dass der obere Arbeitsraum und die Druckkammer über eine Strömungsverbindung miteinander in Verbindung stehen.

Eine weitere Ausgestaltung sieht vor, dass mindestens ein verstellbares Dämpfungsventil extern ansteuerbar ist.

In Anwendung der Erfindung ist es ohne weiteres möglich, dass das Kolben-Zylinder-Aggregat als Einrohr- oder Zweirohrschwingungsdämpfer ausgebildet ist.

Bevorzugte Ausführungsbeispiele der Erfindung sind in den Zeichnungen schematisch dargestellt.

Figur 1 und 2 zeigen ein Kolben-Zylinder-Aggregat in schematischer Darstellung, mit einem verstellbaren Dämpfungsventil im Kolben und einem druckabhängig arbeitenden Rückschlagventil im Bodenventil
Figur 3 zeigt exemplarisch die Abhängigkeiten der Kennfeldspreizung bei bekannten Kolben-Zylinder-Aggregaten ohne erfindungsgemäß vorgesehene Verstelleinrichtung.
Figur 4 zeigt die entsprechende Kennfeldspreizung der Dämpfungskraft gemäß dem Kolben-Zylinder-Aggregat der Figuren 1 und 2.
Figur 5 und 6 zeigen eine Ausführungsform, bei der der obere Arbeitsraum in einer Strömungsverbindung zum Rückschlagventil des Bodenventils eine druckabhängig entsperrbare Ventileinrichtung aufweist.

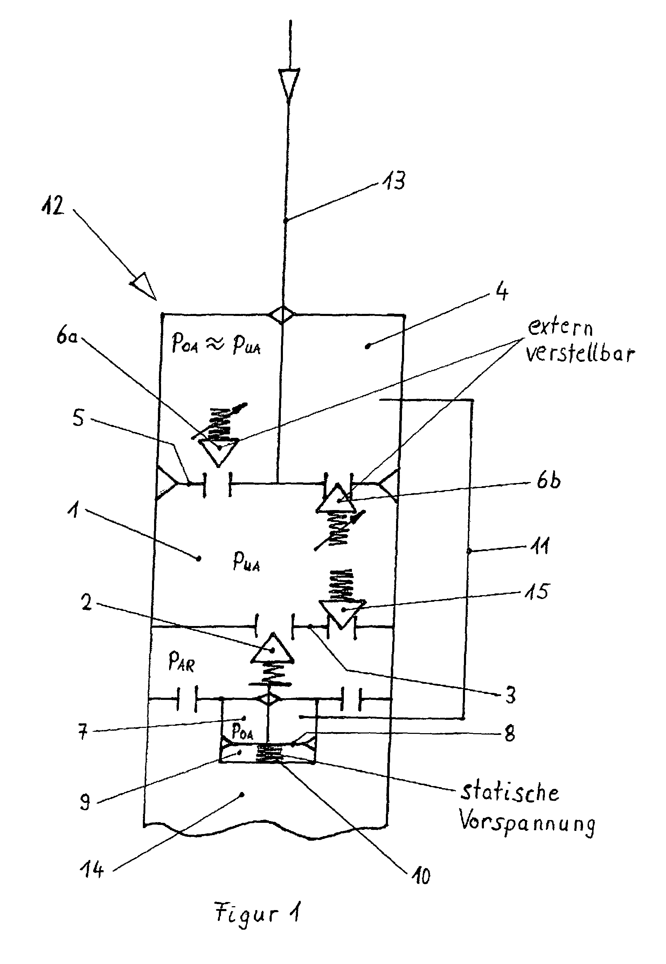

Das in Figur 1 gezeigte Kolben-Zylinder-Aggregat 12 stellt eine schematische Darstellung eines Einrohrschwingungsdämpfers dar. Die Kolbenstange 13 trägt einen Dämpfungskolben 5, der mindestens ein verstellbares Dämpfungsventil 6a bzw. 6b aufweist. Der untere Arbeitsraum 1 ist über ein Bodenventil 3 vom Ausgleichsraum 14 getrennt. Das Bodenventil ist mit einem Rückschlagventil 15 und einem verstellbaren Rückschlagventil 2 versehen. Das verstellbare Rückschlagventil 2 öffnet oder sperrt die Verbindung zwischen dem unteren Arbeitsraum 1 und dem Ausgleichsraum 14. Der obere Arbeitsraum 4 ist über eine Strömungsverbindung 11 mit einer Druckkammer 7 verbunden. Die Druckkammer 7 beaufschlagt das verstellbare Rückschlagventil 2 in Öffnungsrichtung des Rückschlagventils 2, wobei der Trennkolben 8 einen, eine Feder 10 aufnehmenden, Raum 9 abtrennt. Die Feder 10 beaufschlagt das verstellbare Rückschlagventil 2 in Schließrichtung.

Bei einer geringen Druckdifferenz des verstellbaren Dämpfungsventils 6a sind die Drücke im oberen Arbeitsraum 4 und im unteren Arbeitsraum 1 nahezu gleich, dieser Druck steht gleichzeitig über die Strömungsverbindung in der Druckkammer 7 des verstellbaren Rückschlagventils 2 an. Durch den Druck in der Druckkammer 7 wird die statisch voreingestellte Vorspannung durch die Feder 10 im Raum 9 reduziert, da der Druck in der Druckkammer 7 auf den Trennkolben 8 in Öffnungsrichtung des verstellbaren Rückschlagventils 2 wirkt.

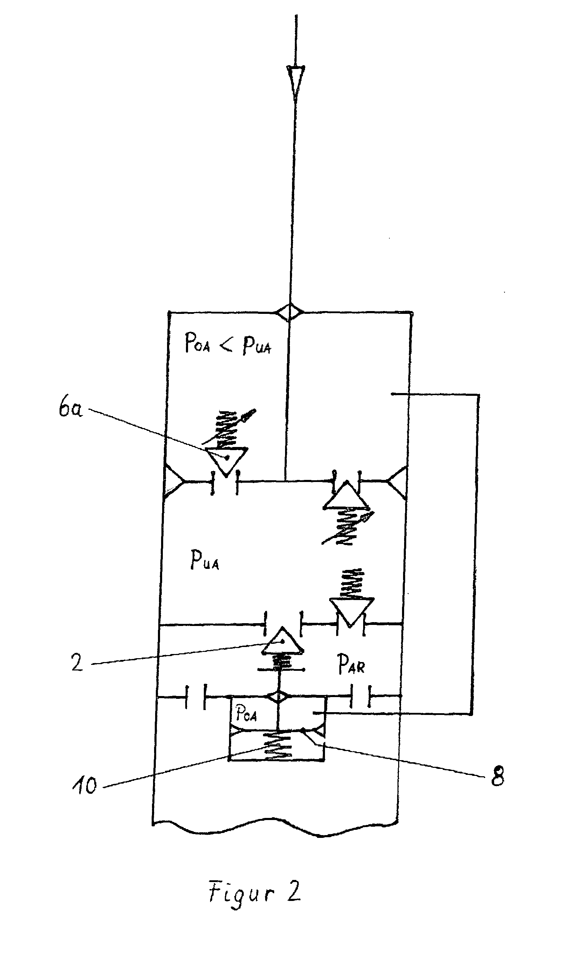

Wird die Druckdifferenz am verstellbaren Dämpfungsventil 6a erhöht, so stellt sich in der Druckstufe im oberen Arbeitsraum ein, um den Betrag der Druckdifferenz, geringerer Druck als im unteren Arbeitsraum ein, so dass dieser geringerer Druck im oberen Arbeitsraum 4 auch in der Druckkammer 7 des verstellbaren Rückschlagventils 2 ansteht. Durch den geringeren Druck in der Druckkammer 7 bewegt sich gemäß Figur 2 der Trennkolben 8, beaufschlagt durch die Feder 10, in Schließrichtung des verstellbaren Rückschlagventils 2. Die Ventilvorspannung des verstellbaren Rückschlagventils 2 wird somit erhöht. Das bedeutet, dass bei einer großen Druckdifferenz am verstellbaren Dämpfungsventil 6a gleichzeitig eine hohe Druckdifferenz am verstellbaren Rückschlagventil 2 des Bodenventils 3 erzielt wird.

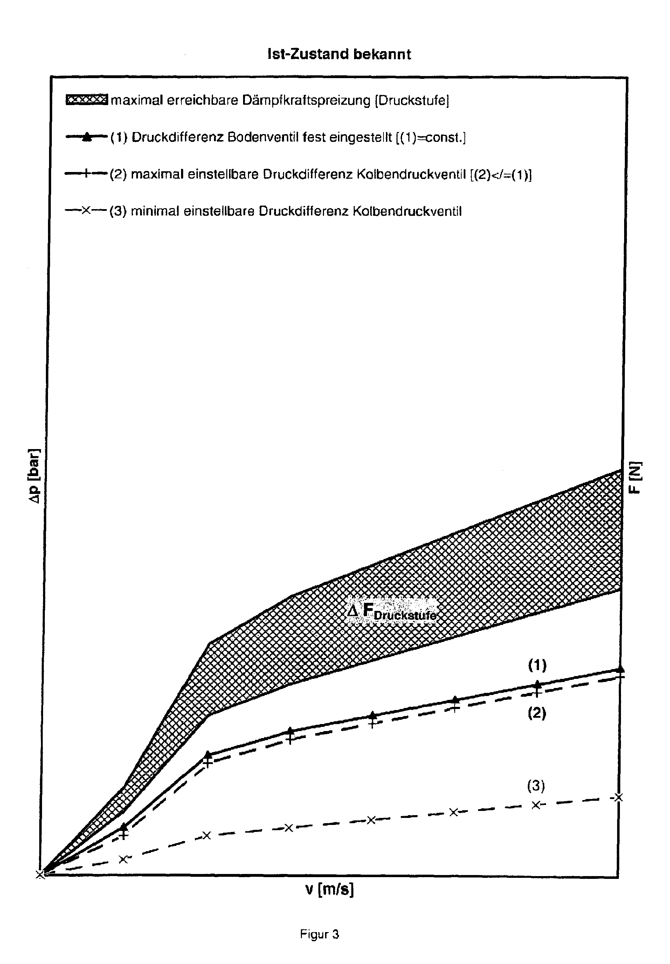

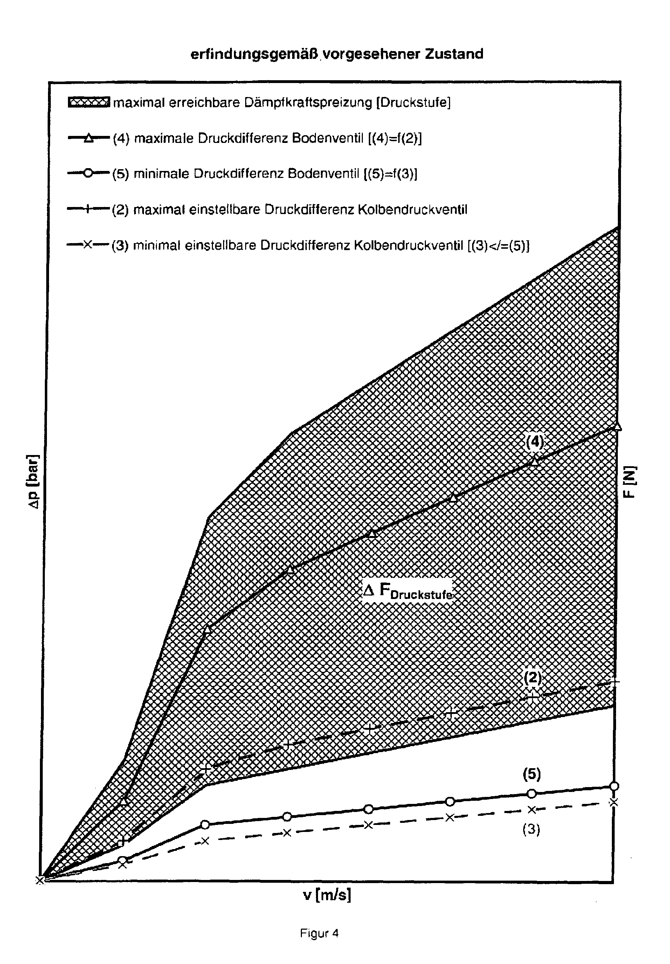

Aus den Figuren 3 und 4 ist die größere Kennfeldspreizung in der Druckstufe des Kolben-Zylinder-Aggregates zu entnehmen.

Figur 3 zeigt die Abhängigkeiten der Druckstufenspreizung bekannter Kolben-Zylinder-Aggregate. Dabei beschreibt die Kurve 1 beispielhaft die Widerstandscharakteristik eines fest eingestellten Bodenventils. Die Kurven 2 und 3 beschreiben beispielhaft den Verstellbereich eines variabel einstellbaren Kolbendruckventils, wobei die Kurve 3 die minimal einstellbare Druckdifferenz des Ventils zeigt. Die aus den Kurven 1 und 3 und 1 und 2 resultierende, maximal erreichbare, Dämpfungskraftspreizung in der Druckrichtung ist als schraffierte Fläche ΔF_{Druckstufe} dargestellt.

Figur 4 beschreibt den erfindungsgemäß vorgesehenen Zustand eines Kolben-Zylinder-Aggregats nach Figur 1 und 2.

Die in Figur 4 dargestellten Kurven 2 und 3 entsprechen den analog nummerierten Kurven der Figur 3. Die Kurve 4 zeigt beispielhaft die, in Abhängigkeit zu Kurve 2 maximale, Druckdifferenz eines Bodenventils mit erfindungsgemäß vorgesehener Verstelleinrichtung. Die Kurve 5 zeigt beispielhaft die, in Abhängigkeit zu Kurve 3 minimale, Druckdifferenz eines Bodenventils mit erfindungsgemäß vorgesehener Verstelleinrichtung. Die aus den Kurven 2 und 4 und 3 und 5 resultierende, maximal erreichbare, Dämpfungskraftspreizung in der Druckrichtung ist als schraffierte Fläche ΔF_{Druckstufe} dargestellt.

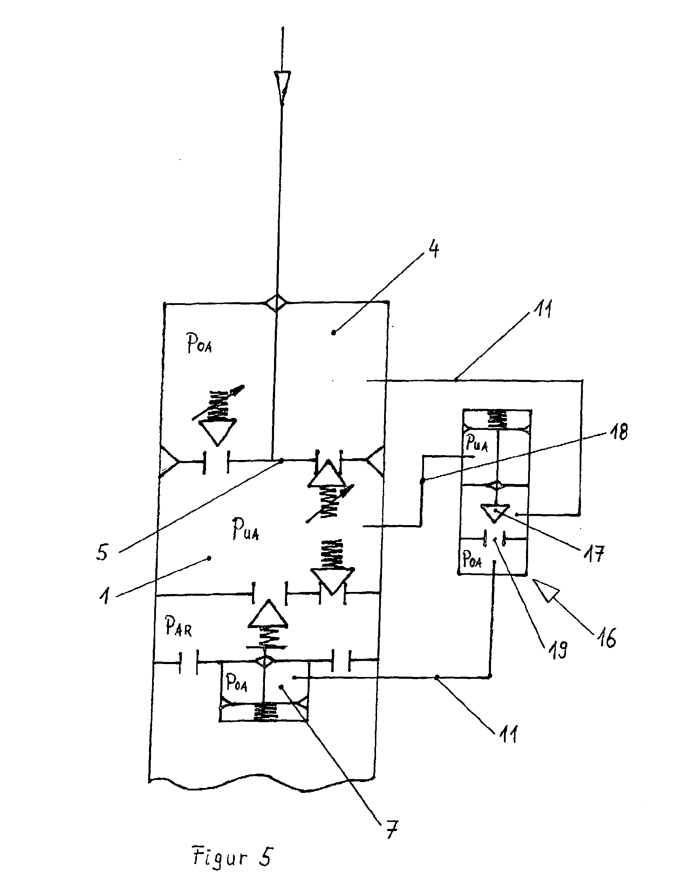

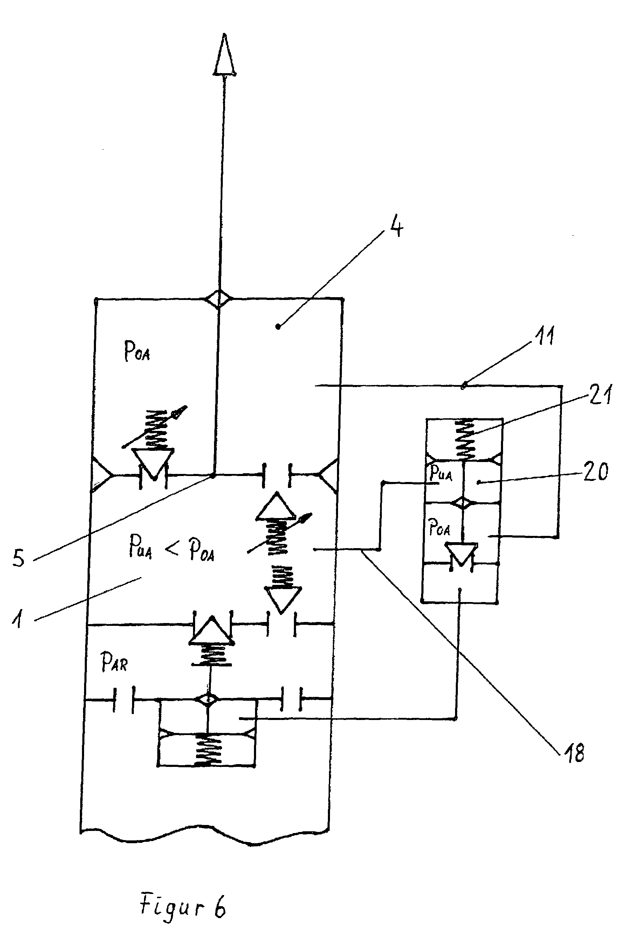

In den Figuren 5 und 6 ist in der Strömungsverbindung 11 zwischen dem oberen Arbeitsraum 4 und der Druckkammer 7 eine druckabhängig entsperrbare Ventileinrichtung 16 angeordnet. Durch die Anwendung der Ventileinrichtung 16 lassen sich mögliche Rückkopplungen bzw. Wechselwirkungen bei der Bewegungsumkehr von der Zugstufe zur Druckstufe des Dämpfungskolbens 5 bzw. umgekehrt vermeiden. Darüber hinaus kann durch diese Ventileinrichtung 16 zusätzlich die Sensibilität des verstellbaren Rückschlagventils 2 beeinflusst werden.

In der Druckstufe des Dämpfungskolbens 5 gibt der Schieber 17 durch den ansteigenden Druck im unteren Arbeitsraum 1 über die Verbindung 18 die Öffnung 19 frei.

In der Figur 6 ist dargestellt, dass in der Zugstufe des Dämpfungskolbens 5 eine Verminderung des Druckes im unteren Arbeitsraum 1, über die Verbindung 18, auch eine Verminderung in der Kammer 20 bewirkt, so dass die Feder 21 den Schieber 17 in Schließrichtung bewegt, bis die Öffnung 19 verschlossen ist.

Ziel der druckabhängig entsperrbaren Ventileinrichtung 16 ist es, zu verhindern, dass in der Zugstufe im Bereich des verstellbaren Dämpfungsventils 6 Drücke in einer Höhe anstehen, die zu einer Verstellung des verstellbaren Rückschlagventils 2 führen würden, da hieraus in der Bewegungsumkehr Rückkopplung bzw. Wechselwirkungen resultieren können. Weiterhin kann über die Druckabhängigkeit der entsperrbaren Ventileinrichtung 16 der Druck, bei dem eine Verstellung des verstellbaren Rückschlagventils 2 einsetzt, variiert werden, so dass indirekt die Sensibilität des verstellbaren Dämpfungsventils 6 im Dämpfungskolben 5 beeinflusst werden kann.

### Bezugszeichenliste

- 1 -: unterer Arbeitsraum
- 2 -: Rückschlagventil
- 3 -: Bodenventil
- 4 -: oberer Arbeitsraum
- 5 -: Dämpfungskolben
- 6 -: verstellbares Dämpfungsventil (6a, 6b)
- 7 -: Druckkammer
- 8 -: Trennkolben
- 9 -: Raum
- 10 -: Feder
- 11 -: Strömungsverbindung
- 12 -: Kolben-Zylinder-Aggregat
- 13 -: Kolbenstange
- 14 -: Ausgleichsraum
- 15 -: Rückschlagventil
- 16 -: druckabhängig entsperrbare Ventileinrichtung
- 17 -: Schieber
- 18 -: Verbindung
- 19 -: Öffnung
- 20 -: Kammer
- 21 -: Feder

## Patentansprüche

1. Kolben-Zylinder-Aggregat mit verstellbarer Dämpfungskraft, bestehend aus einem an einer Kolbenstange befestigten Dämpfungskolben, der den Arbeitszylinder in zwei mit Dämpfungsflüssigkeit gefüllte Arbeitsräume unterteilt und einem über ein Bodenventil verbindbaren Ausgleichsraum und dass die Arbeitsräume über mindestens ein verstellbares Dämpfungsventil miteinander in Verbindung stehen,
**dadurch gekennzeichnet,**
**dass** mindestens ein mit dem unteren Arbeitsraum (1) zusammenarbeitendes Rückschlagventil (2) des Bodenventils (3) über den Druck des oberen Arbeitsraumes (4) hydraulisch beaufschlagt wird.

2. Kolben-Zylinder-Aggregat nach Anspruch 1,
**dadurch gekennzeichnet,**
**dass** im Dämpfungskolben (5) mindestens für die Druckrichtung ein verstellbares Dämpfungsventil (6a) vorgesehen ist.

3. Kolben-Zylinder-Aggregat nach Anspruch 1,
**dadurch gekennzeichnet,**
**dass** das Rückschlagventil (2) über eine, mit dem oberen Arbeitsraum (4) in Verbindung stehende, Druckkammer (7) beaufschlagt wird.

4. Kolben-Zylinder-Aggregat nach Anspruch 3,
**dadurch gekennzeichnet,**
**dass** die Druckkammer (7) einen Trennkolben (8) aufweist, der das hydraulische Medium trennt.

5. Kolben-Zylinder-Aggregat nach Anspruch 4,
**dadurch gekennzeichnet,**
**dass** die Druckkammer (7) einen Raum (9) aufweist, der eine Feder (10) aufnimmt, die auf den Trennkolben (8) wirkt.

6. Kolben-Zylinder-Aggregat nach Anspruch 3,
**dadurch gekennzeichnet,**
**dass** der obere Arbeitsraum (4) und die Druckkammer (7) über eine Strömungsverbindung (11) miteinander in Verbindung stehen.

7. Kolben-Zylinder-Aggregat nach Anspruch 2,
**dadurch gekennzeichnet,**
**dass** mindestens ein verstellbares Dämpfungsventil (6a) extern ansteuerbar ist.

8. Kolben-Zylinder-Aggregat nach Anspruch 1,
**dadurch gekennzeichnet,**
**dass** das Kolben-Zylinder-Aggregat (12) als Einrohr- oder Zweirohrschwingungsdämpfer ausgebildet ist.
